# EUROPÄISCHE PATENTANMELDUNG

(11) **EP 4 190 725 A1**
(43) Veröffentlichungstag der Anmeldung: **07.06.2023**
(21) Anmeldenummer: 21211936.6
(22) Anmeldetag: 02.12.2021
(51) Int. Cl.: B65G 19/02, B65G 47/57

(54) **TRANSPORTVORRICHTUNG UND VERFAHREN ZUM TRANSPORTIEREN VON METALLBANDBUNDEN**

(71) Anmelder: Primetals Technologies Austria GmbH, 4031 Linz (AT)
(72) Erfinder: Hofer, Roland, 4204 Reichenau im Muehlkreis (AT); Pichler, Lukas, 4040 Linz (AT); Salzmann, Christoph, 4040 Linz (AT)
(74) Vertreter: Metals@Linz

(57) **Zusammenfassung**

Die Erfindung betrifft eine Transportvorrichtung (1) zum Transportieren von Metallbandbunden (2). Die Transportvorrichtung (1) umfasst wenigstens einen Bundträger (3), der zum Tragen eines Metallbandbundes (2) eingerichtet ist, zwei auf voneinander verschiedenen Höhen angeordnete Förderstationen (4, 5), die jeweils zum Aufnehmen eines Bundträgers (3) eingerichtet sind, und eine zwischen den Förderstationen (4, 5) verlaufende Förderbahn (6) mit einem Förderantrieb (7), durch den ein Bundträger (3) auf der Förderbahn (6) zwischen den Förderstationen (4, 5) beförderbar ist. Jede Förderstation (4, 5) ist zwischen einer ersten Endstellung, in der die Förderstation (4, 5) horizontal ausgerichtet ist, und einer zweiten Endstellung kippbar, wobei die Förderstation (4, 5) in der zweiten Endstellung eine zu der Steigung der Förderbahn (6) korrespondierende Neigung aufweist und sich an die Förderbahn (6) anschließt, so dass ein Bundträger (3) durch den Förderantrieb (7) von der Förderbahn (6) in die Förderstation (4, 5) und aus der Förderstation (4, 5) auf die Förderbahn (6) beförderbar ist.

## Beschreibung

Die Erfindung betrifft eine Transportvorrichtung zum Transportieren von Metallbandbunden und ein Verfahren zum Betreiben der Transportvorrichtung.

Mit einem Metallbandbund (engl. Coil) wird ein aufgewickeltes Metallband bezeichnet. Metallbandbunde werden insbesondere in Walzwerken hergestellt, in denen Metallbänder gewalzt und anschließend für ihren Transport mit einer Haspel zu Metallbandbunden aufgewickelt werden. Derartige Metallbunde können beispielsweise Bundgewichte bis zu etwa 45 Tonnen und Durchmesser bis zu etwa zwei Metern aufweisen. Die Metallbandbunde müssen häufig nach dem Aufwickeln auf ein anderes Höhenniveau gebracht werden, beispielsweise um sie in einem Bundlager zu lagern. Zum Überwinden des Höhenunterschieds kann beispielsweise eine Hebevorrichtung wie ein Lift oder eine Hebebühne eingesetzt werden. Allerdings erfordert die Installation einer derartigen Hebevorrichtung ausreichend Platz, der oftmals, insbesondere in bereits bestehenden Anlagen, nicht zur Verfügung steht. Außerdem wird durch eine Hebevorrichtung ein kontinuierlicher Transport der Metallbandbunde unterbrochen. Die Unterbrechung des Transports stellt ein Sicherheitsproblem dar, weil die Metallbandbunde an der Unterbrechungsstelle umgelagert werden müssen, wodurch die Gefahr eines Absturzes von Metallbandbunden besteht. Ferner kann das Anheben der Metallbandbunde mit einer Hebevorrichtung relativ zeitaufwändig sein, da die Metallbandbunde nacheinander mit der Hebevorrichtung auf das andere Höhenniveau gebracht werden müssen. Dies kann zu Verzögerungen im Produktionsablauf führen.

Der Erfindung liegt die Aufgabe zugrunde, einen kontinuierlichen, das heißt umlagerungsfreien, Transport von Metallbandbunden zwischen verschiedenen Höhenniveaus zu ermöglichen.

Die Aufgabe wird erfindungsgemäß durch eine Transportvorrichtung mit den Merkmalen des Anspruchs 1 und ein Verfahren mit den Merkmalen des Anspruchs 15 gelöst.

Vorteilhafte Ausgestaltungen der Erfindung sind Gegenstand der Unteransprüche.

Eine erfindungsgemäße Transportvorrichtung zum Transportieren von Metallbandbunden umfasst:
- wenigstens einen Bundträger, der zum Tragen eines Metallbandbundes eingerichtet ist,
- zwei auf voneinander verschiedenen Höhen angeordnete Förderstationen, die jeweils zum Aufnehmen eines Bundträgers eingerichtet sind, und
- eine zwischen den Förderstationen verlaufende Förderbahn mit einem Förderantrieb, durch den ein Bundträger auf der Förderbahn zwischen den Förderstationen beförderbar ist,
- wobei jede Förderstation zwischen einer ersten Endstellung, in der die Förderstation horizontal ausgerichtet ist, und einer zweiten Endstellung kippbar ist, wobei die Förderstation in der zweiten Endstellung eine zu der Steigung der Förderbahn korrespondierende Neigung aufweist und sich an die Förderbahn anschließt, so dass ein Bundträger durch den Förderantrieb von der Förderbahn in die Förderstation und aus der Förderstation auf die Förderbahn beförderbar ist.

Eine erfindungsgemäße Transportvorrichtung ermöglicht einen kontinuierlichen, das heißt umlagerungsfreien, und damit sicheren Transport von Metallbandbunden zwischen zwei verschiedenen Höhenniveaus. Zu diesem Zweck weist die Transportvorrichtung eine zwischen den beiden Höhenniveaus verlaufende und somit geneigte Förderbahn auf, auf der mit jeweils einem Metallbandbund beladbare Bundträger befördert werden können. Ferner weist die Transportvorrichtung auf jedem der beiden Höhenniveaus eine Förderstation auf, in der jeweils ein Bundträger aufgenommen werden kann. Jede Förderstation kann von einer horizontalen ersten Endstellung in eine der Steigung der Förderbahn entsprechende zweite Endstellung gekippt werden. In der ersten Endstellung einer Förderstation kann ein der Transportvorrichtung zugeführter Bundträger in die Förderstation gefahren oder ein mit der Transportvorrichtung transportierter Bundträger aus der Förderstation herausgefahren werden. In der zweiten Endstellung einer Förderstation kann ein Bundträger aus der Förderstation auf die Förderbahn und von der Förderbahn in die Förderstation befördert werden.

Neben dem umlagerungsfreien Transport von Metallbandbunden ermöglicht die Transportvorrichtung außerdem den gleichzeitigen Transport mehrerer Bundträger auf der Förderbahn. Somit können gleichzeitig mehrere mit jeweils einem Metallbandbund beladene Bundträger auf der Förderbahn von einer ersten Förderstation zu der zweiten Förderstation befördert werden. Dadurch wird vorteilhaft ein hoher Durchsatz von mit der Transportvorrichtung transportierten Metallbandbunden ermöglicht. Ferner können nach dem Entladen der Bundträger umgekehrt gleichzeitig mehrere unbeladene Bundträger auf der Förderbahn zurück zu der ersten Förderbahn befördert werden.

Ein weiterer Vorteil einer erfindungsgemäßen Transportvorrichtung ergibt sich in bereits bestehenden Anlagen, die bereits eine für den Transport von Metallbandbunden geeignete Förderbahn aufweisen. Eine derartige Förderbahn kann unter Umständen vorteilhaft relativ einfach zu einer erfindungsgemäßen Transportvorrichtung erweitert werden, indem an ihren Enden jeweils eine Förderstation angeordnet wird.

Bei einer Ausgestaltung der Erfindung weist jede Förderstation einen Kippantrieb, beispielsweise einen Hydraulikantrieb, zum Kippen der Förderstation zwischen den beiden Endstellungen auf. Diese Ausgestaltung der Erfindung berücksichtigt, dass Metallbandbunde in der Regel eine hohe Masse aufweisen.

Bei einer weiteren Ausgestaltung der Erfindung weist jede Förderstation einen Arretiermechanismus auf, mit dem ein Bundträger in der Förderstation arretierbar ist. Beispielsweise weist jeder Arretiermechanismus wenigstens ein zwischen zwei Schwenkstellungen schwenkbares Arretierelement auf, das in einer ersten Schwenkstellung von einem in der Förderstation aufgenommenen Bundträger entkoppelt ist und in einer zweiten Schwenkstellung an den Bundträger angestellt ist. Ferner kann jeder Arretiermechanismus für jedes Arretierelement einen Schwenkantrieb, beispielsweise einen Hydraulikantrieb, aufweisen, mit dem das Arretierelement zwischen den beiden Schwenkstellungen schwenkbar ist. Diese Ausgestaltungen der Erfindung ermöglichen vorteilhaft, einen Bundträger in einer Förderstation gegen ein Herausgleiten aus der Förderstation zu sichern. Dies ist insbesondere beim Kippen der Förderstation wichtig, wenn sich ein Bundträger in der Förderstation befindet, da dabei die Gefahr besteht, dass der Bundträger aufgrund der Schwerkraft in der geneigten Förderstation nach unten gleitet. Da gerade ein beladener Bundträger in der Regel eine hohe Masse aufweist, eignet sich zum Arretieren eines Bundträgers in einer Förderstation insbesondere ein mit einem Schwenkantrieb schwenkbares Arretierelement.

Bei einer weiteren Ausgestaltung der Erfindung weist der Förderantrieb einen Zugmitteltrieb mit einem entlang der Förderbahn verlaufenden Zugmittel auf und jeder Bundträger ist an das Zugmittel koppelbar. Das Zugmittel ist beispielsweise eine Kette, ein Riemen oder ein Seil. Beispielsweise weist das Zugmittel wenigstens ein Mitnahmeelement auf und jeder Bundträger weist ein Koppelelement auf, das an ein Mitnahmeelement des Zugmittels koppelbar ist. Jedes Mitnahmeelement weist beispielsweise eine Ausnehmung für das Koppelelement eines Bundträgers auf und das Koppelelement wird beim Koppeln an das Zugmittel in der Ausnehmung eines Mitnahmeelements des Zugmittels aufgenommen. Derartige Förderantriebe mit einem Zugmittel sind vorteilhaft relativ kostengünstig, robust und wartungsarm.

Bei einer weiteren Ausgestaltung der Erfindung ist jeder Bundträger eingerichtet, ein Metallbandbund derart zu tragen, dass eine Bundachse des Metallbandbundes während des Transports auf der Förderbahn horizontal und senkrecht zu einer Transportrichtung des Transports ausgerichtet ist. Beispielsweise weist jeder Bundträger zwei voneinander beabstandete Auflageflächen für eine umfängliche Außenoberfläche eines Metallbandbundes auf, wobei die beiden Auflageflächen jedes Bundträgers vorzugsweise gegeneinander geneigt sind. Eine derartige Lagerung eines Metallbandbundes auf einem Bundträger vermeidet vorteilhaft Beschädigungen des Metallbandbundes, insbesondere Beschädigungen von Bandkanten des Metallbandbundes, während des Transports. Derartige Beschädigungen können beispielsweise beim Transport eines Metallbandbundes mit senkrecht statt horizontal ausgerichteter Bundachse auftreten, wenn dabei Bandkanten des Metallbandbundes auf einer Fläche aufliegen.

Bei einer weiteren Ausgestaltung der Erfindung weisen die Förderbahn und die Förderstationen zueinander korrespondierende Schienen auf und jeder Bundträger weist zu den Schienen korrespondierende Räder auf. Derartige Schienen ermöglichen eine Führung der Bundträger auf der Förderbahn und in den Förderstationen und insbesondere in der zweiten Endstellung der Förderstation ein problemloses Befördern der Bundträger aus der Förderstation auf die Förderbahn und von der Förderbahn in die Förderstation.

Bei einer weiteren Ausgestaltung der Erfindung weist jeder Bundträger eine Bremse zum Bremsen einer Bewegung des Bundträgers auf. Dadurch kann ein Bundträger erforderlichenfalls gebremst werden, insbesondere auch um ein Herausgleiten aus einer geneigten Förderstation zu verhindern, beispielsweise wenn ein oben genannter Arretiermechanismus der Förderstation nicht vorhanden ist oder versagt.

Bei einer weiteren Ausgestaltung der Erfindung weist die Antriebsvorrichtung eine Steuereinheit auf, die eingerichtet ist, das Verkippen der Förderstationen und den Förderantrieb zu steuern. Ferner kann die Steuereinheit eingerichtet sein, auch die Arretiermechanismen der Förderstationen beziehungsweise deren Schwenkantriebe zu steuern. Insbesondere kann durch die Steuereinheit das Verkippen der Förderstationen, das Arretieren von Bundträgern in den Förderstationen und das Befördern von Bundträgern auf der Förderbahn und zwischen der Förderbahn und den Förderstationen koordiniert werden.

Bei dem erfindungsgemäßen Verfahren zum Betreiben einer erfindungsgemäßen Transportvorrichtung wird ein Bundträger zunächst mit einem Metallbandbund beladen. Anschließend wird der beladene Bundträger zu einer ersten Förderstation gefahren und von der ersten Förderstation in deren erster Endstellung aufgenommen. Anschließend wird die erste Förderstation in die zweite Endstellung gekippt. Anschließend wird der beladene Bundträger an den Förderantrieb gekoppelt und mit dem Förderantrieb aus der ersten Förderstation auf die Förderbahn und auf der Förderbahn zu der zweiten Förderstation befördert. Anschließend wird der beladene Bundträger in der zweiten Endstellung der zweiten Förderstation durch den Förderantrieb in die zweite Förderstation befördert und in der zweiten Förderstation aufgenommen. Anschließend wird die zweite Förderstation mit dem beladenen Bundträger in die erste Endstellung gekippt. Schließlich wird der beladene Bundträger aus der zweiten Förderstation herausgefahren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 eine Förderbahn eines Ausführungsbeispiels einer Transportvorrichtung und einen auf der Förderbahn beförderten Bundträger,
FIG 2 einen Förderantrieb eines Ausführungsbeispiels einer Transportvorrichtung,
FIG 3 eine Kopplung eines Bundträgers an einen Förderantrieb eines Ausführungsbeispiels einer Transportvorrichtung,
FIG 4 ein Ausführungsbeispiel einer Transportvorrichtung im Bereich einer ersten Förderstation,
FIG 5 ein Ausführungsbeispiel einer Transportvorrichtung im Bereich einer zweiten Förderstation,
FIG 6 eine Seitenansicht der in Figur 4 gezeigten ersten Förderstation mit geöffnetem Gehäuse,
FIG 7 eine Rückansicht der in Figur 4 gezeigten ersten Förderstation mit geöffnetem Gehäuse,
FIG 8 ein Blockdiagramm einer Steuerung eines Ausführungsbeispiels einer Transportvorrichtung,
FIG 9 ein Ausführungsbeispiel einer Transportvorrichtung beim gleichzeitigen Befördern mehrerer beladener Bundträger.

Einander entsprechende Teile sind in den Figuren mit denselben Bezugszeichen versehen.

Die Figuren zeigen ein Ausführungsbeispiel einer Transportvorrichtung 1 zum Transportieren von Metallbandbunden 2 durch schematische Darstellungen, in denen für die Erfindung irrelevante Details weggelassen sind. Die Transportvorrichtung 1 umfasst wenigstens einen Bundträger 3, der zum Tragen eines Metallbandbundes 2 eingerichtet ist, zwei auf voneinander verschiedenen Höhen angeordnete Förderstationen 4, 5, die jeweils zum Aufnehmen eines Bundträgers 3 eingerichtet sind, eine zwischen den Förderstationen 4, 5 verlaufende Förderbahn 6 mit einem Förderantrieb 7, durch den ein Bundträger 3 auf der Förderbahn 6 zwischen den Förderstationen 4, 5 beförderbar ist, und eine Steuereinheit 8.

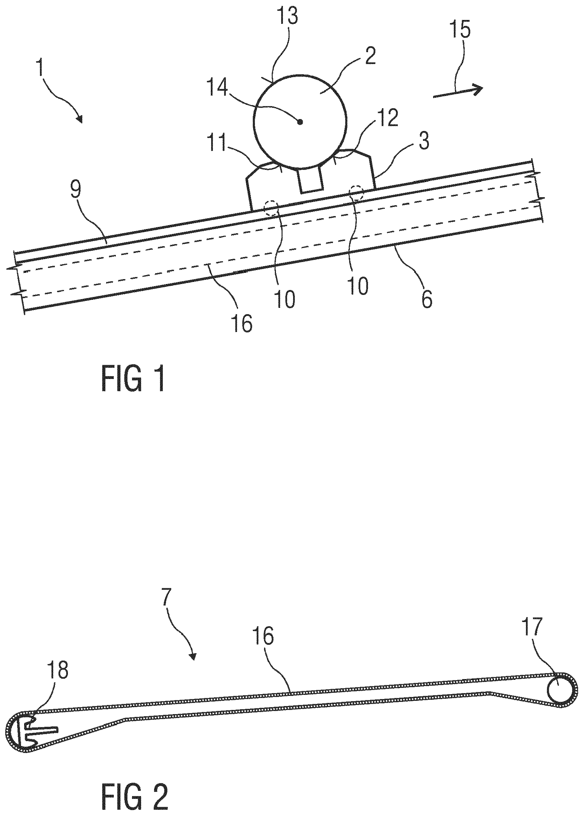

Figur 1 (FIG 1) zeigt die Förderbahn 6 und einen auf der Förderbahn 6 beförderten Bundträger 3, der mit einem Metallbandbund 2 beladen ist. Die Förderbahn 6 weist eine Steigung auf, um den Höhenunterschied zwischen den Förderstationen 4, 5 zu überwinden. Die Förderbahn 6 weist Schienen 9 auf, auf denen der Bundträger 3 geführt wird. Der Bundträger 3 weist zu den Schienen 9 korrespondierende Räder 10 auf. Ferner weist der Bundträger 3 zwei voneinander beabstandete, gegeneinander geneigte Auflageflächen 11, 12 auf, auf denen eine umfängliche Außenoberfläche 13 des Metallbandbundes 2 gelagert ist, so dass eine Bundachse 14 des Metallbandbundes 2 während des Transports auf der Förderbahn 6 horizontal und senkrecht zu einer Transportrichtung 15 des Transports ausgerichtet ist. Der Förderantrieb 7 weist einen Zugmitteltrieb mit einem entlang der Förderbahn 6 unterhalb der Schienen 9 verlaufenden Zugmittel 16 auf, an das der Bundträger 3 beim Transport auf der Förderbahn 6 gekoppelt ist.

Figur 2 (FIG 2) zeigt den Zugmitteltrieb des Förderantriebs 7. Das Zugmittel 16 dieses Ausführungsbeispiels ist eine geschlossene Kette mit zwei Umlenkbereichen. In einem Umlenkbereich ist eine Antriebseinheit 17 angeordnet, mit der die Kette antreibbar ist. In dem anderen Umlenkbereich ist eine Spanneinheit 18 angeordnet, mit der die Kette spannbar ist. Statt einer Kette kann als Zugmittel 16 beispielsweise auch ein Riemen, Seil oder dergleichen verwendet werden.

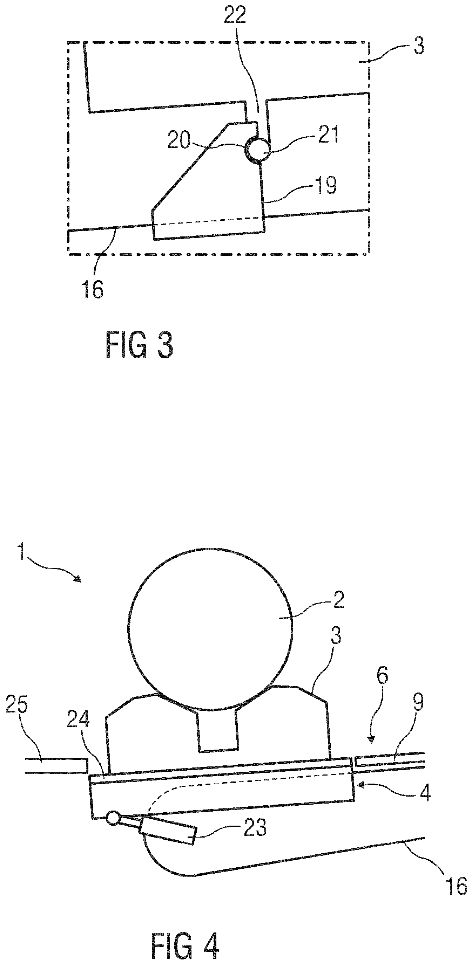

Figur 3 (FIG 3) zeigt die Kopplung des Bundträgers 3 an das Zugmittel 16. An dem Zugmittel 16 sind mehrere (in Figur 2 nicht dargestellte) Mitnahmeelemente 19 voneinander beabstandet angeordnet. Jedes Mitnahmeelement 19 weist eine Ausnehmung 20 auf. Der Bundträger 3 weist ein Koppelelement 21 auf, das an einer Halterung 22 an einer Unterseite des Bundträgers 3 angeordnet ist und zum Koppeln des Bundträgers 3 an das Zugmittel 16 in die Ausnehmung 20 eines Mitnahmeelements 19 eingreift. Das Koppelelement 21 ist beispielsweise eine Stange, die von der Halterung 22 zu dem Zugmittel 16 hin absteht.

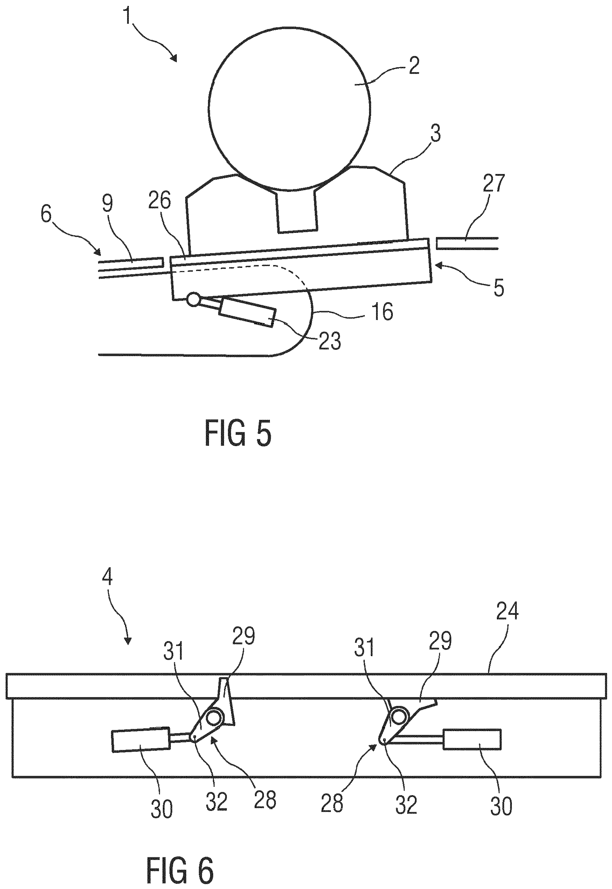

Die Figuren 4 und 5 (FIG 4 und FIG 5) zeigen die Transportvorrichtung 1 jeweils im Bereich einer der beiden Förderstationen 4, 5. Jede Förderstation 4, 5 ist durch einen Kippantrieb 23 zwischen zwei Endstellungen kippbar. Der Kippantrieb 23 ist beispielsweise ein Hydraulikantrieb. In einer ersten Endstellung einer Förderstation 4, 5 ist die Förderstation 4, 5 horizontal ausgerichtet. In der zweiten Endstellung weist die Förderstation 4, 5 eine zu der Steigung der Förderbahn 6 korrespondierende Neigung auf und schließt sich an die Förderbahn 6 an, so dass ein Bundträger 3 durch den Förderantrieb 7 von der Förderbahn 6 in die Förderstation 4, 5 und aus der Förderstation 4, 5 auf die Förderbahn 6 beförderbar ist. Eine erste Förderstation 4 ist im dargestellten Ausführungsbeispiel auf einem niedrigeren Höhenniveau als die zweite Förderstation 5 angeordnet.

Figur 4 (FIG 4) zeigt eine Seitenansicht der ersten Förderstation 4 in ihrer zweiten Endstellung, wobei in der Förderstation 4 ein mit einem Metallbandbund 2 beladener Bundträger 3 aufgenommen ist. Die erste Förderstation 4 weist zu den Schienen 9 der Förderbahn 6 korrespondierende Schienen 24 auf, über die ein Bundträger 3 in der zweiten Endstellung der ersten Förderstation 4 von der Förderbahn 6 in die erste Förderstation 4 und aus der ersten Förderstation 4 auf die Förderbahn 6 beförderbar ist. Ferner ist ein Bundträger 3 in der ersten Endstellung der ersten Förderstation 4 über von zu der ersten Förderstation 4 führende, horizontal verlaufende Schienen 25 in die erste Förderstation 4 und aus der ersten Förderstation 4 heraus fahrbar.

Figur 5 (FIG 5) zeigt eine Seitenansicht der zweiten Förderstation 5 in ihrer zweiten Endstellung, wobei in der Förderstation 5 ein mit einem Metallbandbund 2 beladener Bundträger 3 aufgenommen ist. Analog zur ersten Förderstation 4 weist auch die zweite Förderstation 5 zu den Schienen 9 der Förderbahn 6 korrespondierende Schienen 26 auf, über die ein Bundträger 3 in der zweiten Endstellung der zweiten Förderstation 5 von der Förderbahn 6 in die zweite Förderstation 5 und aus der zweiten Förderstation 5 auf die Förderbahn 6 beförderbar ist. Ferner ist ein Bundträger 3 in der ersten Endstellung der zweiten Förderstation 5 über von zu der zweiten Förderstation 5 führende, horizontal verlaufende Schienen 27 in die zweite Förderstation 5 und aus der zweiten Förderstation 5 heraus fahrbar.

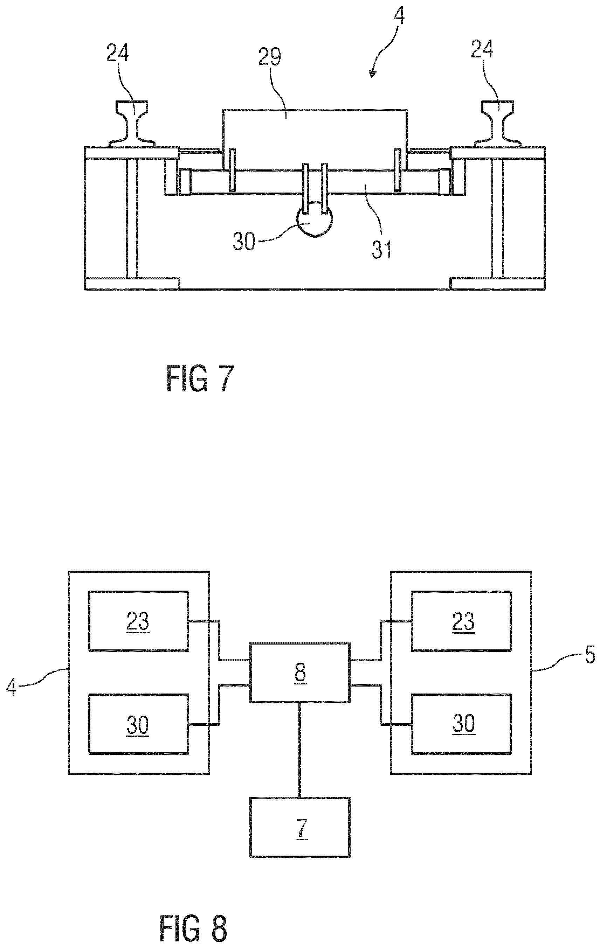

Ferner weist jede Förderstation 4, 5 einen Arretiermechanismus 28 auf, mit dem ein Bundträger 3 in der Förderstation 4, 5 arretierbar ist. Der Arretiermechanismus 28 wird anhand von den Figuren 6 und 7 für die erste Förderstation 4 beschrieben. Die zweite Förderstation 5 weist einen analogen Arretiermechanismus 28 auf.

Figur 6 (Fig 6) zeigt eine Seitenansicht der ersten Förderstation 4 mit geöffnetem Gehäuse.

Figur 7 (FIG 7) zeigt eine Rückansicht der ersten Förderstation 4 mit geöffnetem Gehäuse.

Der Arretiermechanismus 28 weist zwei Arretierelemente 29 auf, die jeweils zwischen zwei Schwenkstellungen schwenkbar sind. In einer ersten Schwenkstellung ist ein Arretierelement 29 von einem in der ersten Förderstation 4 aufgenommenen Bundträger 3 entkoppelt. In der zweiten Schwenkstellung ist das Arretierelement 29 an den Bundträger 3, beispielsweise an das Koppelelement 21 und/oder die Halterung 22 des Bundträgers 3, angestellt. Für jedes Arretierelement 29 weist der Arretiermechanismus 28 einen Schwenkantrieb 30 auf, mit dem das Arretierelement 29 über ein Hebelelement 31, das fest mit dem Arretierelement 29 verbunden und über ein Gelenk 32 an den Schwenkantrieb 30 gekoppelt ist, zwischen den beiden Schwenkstellungen schwenkbar ist.

Die Schwenkantriebe 30 sind beispielsweise jeweils als ein Hydraulikantrieb ausgebildet. Jedes Arretierelement 29 ist klappenartig ausgebildet und ist in der ersten Schwenkstellung heruntergeklappt und in der zweiten Schwenkstellung hochgeklappt. In Figur 6 ist das rechte Arretierelement 29 in der ersten Schwenkstellung dargestellt und das linke Arretierelement 29 ist in der zweiten Schwenkstellung dargestellt. In Figur 7 ist ein Arretierelement 29 in der zweiten Schwenkstellung dargestellt. In anderen Ausführungsbeispielen kann der Arretiermechanismus 28 statt zweier Arretierelemente 29 nur ein Arretierelement 29 aufweisen.

Figur 8 (FIG 8) zeigt ein Blockdiagramm der Steuerung der Transportvorrichtung 1. Die Steuerung weist die Steuereinheit 8 auf. Die Steuereinheit 8 ist eingerichtet, den Förderantrieb 7 der Förderbahn 6, die Kippantriebe 23 der Förderstationen 4, 5 und die Schwenkantriebe 30 der Arretierelemente 29 der Förderstationen 4, 5 zu steuern. Durch die Stuereinheit 8 werden das Verkippen der Förderstationen 4, 5, das Arretieren von Bundträgern 3 in den Förderstationen 4, 5, das Koppeln von Bundträgern 3 an das Zugmittel 16, das Entkoppeln von Bundträgern 3 von dem Zugmittel 16 und das Befördern von Bundträgern 3 auf der Förderbahn 6 und zwischen der Förderbahn 6 und den Förderstationen 4, 5 gesteuert und koordiniert.

Zum Transport eines Metallbandbundes mit der Transportvorrichtung 1 wird zunächst ein Bundträger 3 mit dem Metallbandbund 2 beladen. Der beladene Bundträger 3 wird auf den Schienen 25 zu der ersten Förderstation 4 gefahren und von der ersten Förderstation 4 in deren erster Endstellung aufgenommen. Dann wird der beladene Bundträger 3 in der ersten Endstellung der ersten Förderstation 4 mit dem Arretiermechanismus 28 der ersten Förderstation 4 in der ersten Förderstation 4 arretiert. Anschließend wird die erste Förderstation 4 mit deren Kippantrieb 23 in die zweite Endstellung gekippt. Durch das Kippen der ersten Förderstation 4 in die zweite Endstellung wird das Koppelelement 21 des Bundträgers 3 zu dem Zugmittel 16 der Förderbahn 6 hin bewegt. Durch Antreiben des Zugmittels 16 wird das Koppelelement 21 an das Zugmittel 16 gekoppelt, indem es in Eingriff mit der Ausnehmung 20 eines Mitnahmeelements 19 gebracht wird. Nach dem Koppeln des Bundträgers 3 an das Zugmittel 16 wird die Arretierung des Bundträgers 3 in der ersten Förderstation 4 gelöst. Anschließend wird der beladene Bundträger 3 mit dem Förderantrieb 7 aus der ersten Förderstation 4 auf die Förderbahn 6 und auf der Förderbahn 6 zu der zweiten Förderstation 5 befördert. Bevor der beladene Bundträger 3 die zweite Förderstation 5 erreicht, wird die zweite Förderstation 5 in ihre zweite Endstellung gekippt. Der beladene Bundträger 3 wird durch den Förderantrieb 7 in die zweite Förderstation 5 befördert und in der zweiten Förderstation 5 durch deren Arretiermechanismus 28 arretiert. Anschließend wird der Bundträger 3 von dem Zugmittel 16 entkoppelt, in dem das Zugmittel 16 etwas zurückgefahren wird, so dass das vorher an das Koppelelement 21 gekoppelte Mitnahmeelement 19 von dem Koppelelement 21 entkoppelt wird. Nach dem Entkoppeln des Bundträgers 3 von dem Zugmittel 16 wird die zweite Förderstation 5 mit dem beladenen Bundträger 3 in die erste Endstellung gekippt. Anschließend wird die Arretierung des Bundträgers 3 in der zweiten Förderstation 5 gelöst und der beladene Bundträger 3 wird auf den Schienen 27 aus der zweiten Förderstation 5 herausgefahren.

Um einen Bundträger 3 nach dem Entladen von der zweiten Förderstation 5 zurück zur ersten Förderstation 4 zu transportieren, wird umgekehrt verfahren. Der unbeladene Bundträger 3 wird auf den Schienen 27 zu der zweiten Förderstation 5 gefahren und von der zweiten Förderstation 5 in deren erster Endstellung aufgenommen. Dann wird der Bundträger 3 mit dem Arretiermechanismus 28 der zweiten Förderstation 5 in der zweiten Förderstation 5 arretiert. Anschließend wird die zweite Förderstation 5 in die zweite Endstellung gekippt und der Bundträger 3 wird an das Zugmittel 16 gekoppelt, analog zum Koppeln eines beladenen Bundträgers 3 an das Zugmittel 16 in der ersten Förderstation 4. Nach dem Koppeln des Bundträgers 3 an das Zugmittel 16 wird die Arretierung des Bundträgers 3 in der zweiten Förderstation 5 gelöst. Anschließend wird der Bundträger 3 mit dem Förderantrieb 7 aus der zweiten Förderstation 5 auf die Förderbahn 6, auf der Förderbahn 6 zu der ersten Förderstation 4 und von der Förderbahn 6 in die in ihre zweite Endstellung gekippte erste Förderstation 4 befördert. Dann wird der Bundträger 3 in der ersten Förderstation 4 arretiert und von dem Zugmittel 16 entkoppelt, analog zum Entkoppeln eines beladenen Bundträgers 3 von dem Zugmittel 16 in der zweiten Förderstation 5. Nach dem Entkoppeln des Bundträgers 3 von dem Zugmittel 16 wird die erste Förderstation 4 mit dem Bundträger 3 in die erste Endstellung gekippt. Anschließend wird die Arretierung des Bundträgers 3 in der ersten Förderstation 4 gelöst und der Bundträger 3 wird auf den Schienen 25 aus der ersten Förderstation 4 herausgefahren.

Während ein erster mit einem Metallbandbund 2 beladener Bundträger 3 auf der Förderbahn 6 von der ersten Förderstation 4 zu der zweiten Förderstation 5 befördert wird, kann die erste Förderstation 4 wieder in ihre erste Endstellung gekippt werden und ein zweiter mit einem Metallbandbund 2 beladener Bundträger 3 kann in die erste Förderstation 4 gefahren werden. Dieser zweite beladene Bundträger 3 kann dann noch während des Beförderns des ersten beladenen Bundträgers 3 ebenfalls auf der Förderbahn 6 befördert werden. Auf diese Weise können auf der Förderbahn 6 gleichzeitig mehrere beladene Bundträger 3 befördert werden.

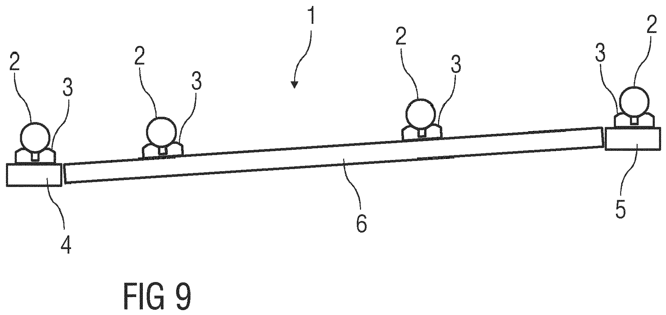

Figur 9 (FIG 9) zeigt eine Transportvorrichtung 1 beim gleichzeitigen Befördern mehrerer beladener Bundträger 3.

Analog dazu können auf der Förderbahn 6 auch gleichzeitig mehrere unbeladene Bundträger 3 von der zweiten Förderstation 5 zu der ersten Förderstation 4 befördert werden.

### Bezugszeichenliste

- 1: Transportvorrichtung
- 2: Metallbandbund
- 3: Bundträger
- 4: erste Förderstation
- 5: zweite Förderstation
- 6: Förderbahn
- 7: Förderantrieb
- 8: Steuereinheit
- 9: Schiene
- 10: Rad
- 11, 12: Auflagefläche
- 13: Außenoberfläche
- 14: Bundachse
- 15: Transportrichtung
- 16: Zugmittel
- 17: Antriebseinheit
- 18: Spanneinheit
- 19: Mitnahmeelement
- 20: Ausnehmung
- 21: Koppelelement
- 22: Halterung
- 23: Kippantrieb
- 24 bis 27: Schiene
- 28: Arretiermechanismus
- 29: Arretierelement
- 30: Schwenkantrieb
- 31: Hebelelement
- 32: Gelenk

## Patentansprüche

1. Transportvorrichtung (1) zum Transportieren von Metallbandbunden (2), die Transportvorrichtung (1) umfassend
- wenigstens einen Bundträger (3), der zum Tragen eines Metallbandbundes (2) eingerichtet ist,
- zwei auf voneinander verschiedenen Höhen angeordnete Förderstationen (4, 5), die jeweils zum Aufnehmen eines Bundträgers (3) eingerichtet sind, und
- eine zwischen den Förderstationen (4, 5) verlaufende Förderbahn (6) mit einem Förderantrieb (7), durch den ein Bundträger (3) auf der Förderbahn (6) zwischen den Förderstationen (4, 5) beförderbar ist,
- wobei jede Förderstation (4, 5) zwischen einer ersten Endstellung, in der die Förderstation (4, 5) horizontal ausgerichtet ist, und einer zweiten Endstellung kippbar ist, wobei die Förderstation (4, 5) in der zweiten Endstellung eine zu der Steigung der Förderbahn (6) korrespondierende Neigung aufweist und sich an die Förderbahn (6) anschließt, so dass ein Bundträger (3) durch den Förderantrieb (7) von der Förderbahn (6) in die Förderstation (4, 5) und aus der Förderstation (4, 5) auf die Förderbahn (6) beförderbar ist.

2. Transportvorrichtung (1) nach Anspruch 1, wobei jede Förderstation (4, 5) einen Kippantrieb (23) zum Kippen der Förderstation (4, 5) zwischen den beiden Endstellungen aufweist.

3. Transportvorrichtung (1) nach Anspruch 1 oder 2, wobei jede Förderstation (4, 5) einen Arretiermechanismus (28) aufweist, mit dem ein Bundträger (3) in der Förderstation (4, 5) arretierbar ist.

4. Transportvorrichtung (1) nach Anspruch 3, wobei jeder Arretiermechanismus (28) wenigstens ein zwischen zwei Schwenkstellungen schwenkbares Arretierelement (29) aufweist, das in einer ersten Schwenkstellung von einem in der Förderstation (4, 5) aufgenommenen Bundträger (3) entkoppelt ist und in einer zweiten Schwenkstellung an den Bundträger (3) angestellt ist.

5. Transportvorrichtung (1) nach Anspruch 4, wobei jeder Arretiermechanismus (28) für jedes Arretierelement (29) einen Schwenkantrieb (30) aufweist, mit dem das Arretierelement (29) zwischen den beiden Schwenkstellungen schwenkbar ist.

6. Transportvorrichtung (1) nach einem der vorhergehenden Ansprüche, wobei der Förderantrieb (7) einen Zugmitteltrieb mit einem entlang der Förderbahn (6) verlaufenden Zugmittel (16) aufweist und jeder Bundträger (3) an das Zugmittel (16) koppelbar ist.

7. Transportvorrichtung (1) nach Anspruch 6, wobei das Zugmittel (16) wenigstens ein Mitnahmeelement (19) aufweist und jeder Bundträger (3) ein Koppelelement (21) aufweist, das an ein Mitnahmeelement (19) des Zugmittels (16) koppelbar ist.

8. Transportvorrichtung (1) nach Anspruch 7, wobei jedes Mitnahmeelement (19) eine Ausnehmung (20) für ein Koppelelement (21) eines Bundträgers (3) aufweist und das Koppelelement (21) des Bundträgers (3) beim Koppeln des Koppelelements (21) an das Zugmittel (16) in der Ausnehmung (20) eines Mitnahmeelements (19) aufgenommen wird.

9. Transportvorrichtung (1) nach einem der vorhergehenden Ansprüche, wobei jeder Bundträger (3) eingerichtet ist, ein Metallbandbund (2) derart zu tragen, dass eine Bundachse (14) des Metallbandbundes (2) während des Transports auf der Förderbahn (6) horizontal und senkrecht zu einer Transportrichtung (15) des Transports ausgerichtet ist.

10. Transportvorrichtung (1) nach Anspruch 9, wobei jeder Bundträger (3) zwei voneinander beabstandete Auflageflächen (11, 12) für eine umfängliche Außenoberfläche (13) eines Metallbandbundes (2) aufweist.

11. Transportvorrichtung (1) nach Anspruch 10, wobei die beiden Auflageflächen (11, 12) jedes Bundträgers (3) gegeneinander geneigt sind.

12. Transportvorrichtung (1) nach einem der vorhergehenden Ansprüche, wobei die Förderbahn (6) und die Förderstationen (4, 5) zueinander korrespondierende Schienen (9, 24, 26) aufweisen und jeder Bundträger (3) zu den Schienen (9, 24, 26) korrespondierende Räder (10) aufweist.

13. Transportvorrichtung (1) nach einem der vorhergehenden Ansprüche, wobei jeder Bundträger (3) eine Bremse zum Bremsen einer Bewegung des Bundträgers (3) aufweist.

14. Transportvorrichtung (1) nach einem der vorhergehenden Ansprüche mit einer Steuereinheit (8), die eingerichtet ist, das Verkippen der Förderstationen (4, 5) und den Förderantrieb (7) zu steuern.

15. Verfahren zum Betreiben einer gemäß einem der vorhergehenden Ansprüche ausgebildeten Transportvorrichtung (1), wobei
- ein Bundträger (3) mit einem Metallbandbund (2) beladen wird,
- anschließend der beladene Bundträger (3) zu einer ersten Förderstation (4) gefahren und von der ersten Förderstation (4) in deren erster Endstellung aufgenommen wird,
- anschließend die erste Förderstation (4) in die zweite Endstellung gekippt wird,
- anschließend der beladene Bundträger (3) an den Förderantrieb (7) gekoppelt und mit dem Förderantrieb (7) aus der ersten Förderstation (4) auf die Förderbahn (6) und auf der Förderbahn (6) zu der zweiten Förderstation (5) befördert wird,
- anschließend der beladene Bundträger (3) in der zweiten Endstellung der zweiten Förderstation (5) durch den Förderantrieb (7) in die zweite Förderstation (5) befördert und in der zweiten Förderstation (5) aufgenommen wird,
- anschließend die zweite Förderstation (5) mit dem beladenen Bundträger (3) in die erste Endstellung gekippt wird, und
- anschließend der beladene Bundträger (3) aus der zweiten Förderstation (5) herausgefahren wird.
